# EUROPÄISCHE PATENTSCHRIFT

(11) **EP 3 565 863 B1**
(45) Veröffentlichungstag und Bekanntmachung des Hinweises auf die Patenterteilung: **13.04.2022**
(21) Anmeldenummer: 17811604.2
(22) Anmeldetag: 11.12.2017
(51) Int. Cl.: C09J 7/30

(54) **KLEBEBAND, INSBESONDERE WICKELBAND**
ADHESIVE TAPE, PARTICULARLY WRAPPING TAPE
BANDE ADHÉSIVE, EN PARTICULIER BANDE ENVELOPPANTE

(30) Priorität: 03.01.2017 DE 202017100009 U
(43) Veröffentlichungstag der Anmeldung: 13.11.2019
(73) Patentinhaber: Certoplast Technische Klebebänder GmbH, 42285 Wuppertal (DE)
(72) Erfinder: LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2017/082224
(87) Internationale Veröffentlichungsnummer: WO 2018/127361

(56) Entgegenhaltungen:
- WO-A1-2016/187009
- DE-A1-102014 223 451
- DATABASE WPI Week 199730 Thomson Scientific, London, GB; AN 1997-332758 XP002778380, & WO 97/21778 A1 (SLIONTEC CORP) 19. Juni 1997 (1997-06-19) -& JP H09 221614 A (SLIONTEC KK) 26. August 1997 (1997-08-26)

## Beschreibung

Die Erfindung betrifft die Verwendung eines Klebebandes als Wickelband zum Ummanteln von Kabeln in Automobilen, wobei das Klebeband mit einem längs erstreckten Träger, und mit einer ein- beidseitig aufgebrachten Beschichtung auf Basis eines Klebstoffes ausgerüstet ist, und wobei in den Klebstoff größtenteils strukturstabile Hohlkörper mit einer Grammatur von wenigstens 2 Masse-% und bis zu 10 Masse-% bezogen auf die Klebstoffmasse eingelagert sind.

Klebebänder und insbesondere Wickelbänder zum Ummanteln von Kabeln in Automobilen müssen vielfältigen Anforderungen genügen. Hierzu gehört nicht nur eine leichte Abwickelbarkeit, weil die fraglichen Klebebänder bzw. Wickelbänder typischerweise von Hand um die zu ummantelnden Kabel gewickelt werden. Sondern die betreffenden Wickelbänder müssen auch erhöhten Temperaturen bis hin zu 150 °C oder noch mehr widerstehen. Darüber hinaus kommt es darauf an, dass die Kabelisolierung der zur ummantelnden Kabel durch den Einfluss des Klebebandes über längere Zeit nicht versprödet. Schließlich müssen die fraglichen Klebebänder bzw. Wickelbänder auch über eine gute Verträglichkeit gegenüber Chemikalien, insbesondere gegenüber Benzin, Öl oder vergleichbaren Medien beispielsweise im Motorraum verfügen.

Daneben kommt es auch darauf an, die Geräuschentwicklung gering zu halten. Tatsächlich sollen die mit dem Wickelband ummantelten Kabel innerhalb des Automobils hinsichtlich etwaiger Klapper- oder Schlaggeräusche im Betrieb akustisch gedämpft werden. Hierzu existieren im Stand der Technik eine Vielzahl an verschiedenen Vorgehensweisen, die sämtlich durch Modifikation des Trägers die gewünschte Geräuschdämpfung erzielen wollen. So ist es durch den Stand der Technik nach der EP 2 034 576 A1 bekannt, mit einem ersten und einem zweiten Träger zu arbeiten. Bei dem ersten Träger kann es sich um ein Aluminiumverbundmaterial handeln, während der zweite Träger aus einem Gewebe, insbesondere aus einem PET-Gewebe besteht.

Darüber hinaus sind auch andere Materialkombinationen denkbar, bei denen der erste Träger aus einer Kunststofffolie und der zweite Träger aus einem Gewebe besteht. Ebenso solche, bei welchen der ersten Träger aus einem Gewebe und der zweite Träger aus einem Vlies hergestellt sind. Dadurch soll einerseits die gewünschte Abriebfestigkeit erreicht werden und andererseits unter anderem eine hohe Geräuschdämpfung erzielt werden. Der hiermit verbundene herstellungstechnische Aufwand ist jedoch groß, weil die einzelnen Träger separat hergestellt und miteinander vereinigt werden müssen.

Eine andere Ausführungsvariante wird in dem Gebrauchsmuster DE 20 2012 104 161 U1 beschrieben. An dieser Stelle kommt ein aus einem Gewirk mit aus Garn gebildeten Maschen hergestellter Träger zum Einsatz. Außerdem umfasst der Träger in Querrichtung parallel zueinander verlaufende Schussfäden, welche in den Maschen des Gewirks gehalten werden. Auch in diesem Fall ist der herstellungstechnische Aufwand für den Träger beachtlich.

Eine gattungsgemäße Verwendung ist durch die DE 10 2014 223 451 A1 bekannt geworden. Hier geht es um modifizierte Schichtselikate zur Steuerung der Abrollkraft von Haftklebemassen. Der Auftrag der Haftklebemasse erfolgt dabei in einer Dispersion. Als Füllstoffe können dabei Siliciumdioxide oder auch Glas als Voll- oder Hohlkugeln eingesetzt werden. Auf diese Weise soll insgesamt ein Klebeband mit über eine größere Bandbreite einstellbaren Abrollkräften zur Verfügung gestellt werden.

Die WO2016/187009 A1 beschäftigt sich mit einem druckempfindlichen Klebeartikel, welcher jedoch nicht in Verbindung mit Wickelbändern für die Kabelbandagierung bei Automobilen zum Einsatz kommt, sondern vielmehr zur Befestigung von Verstärkungen am Automobil. Als Folge hiervon wird eine gewisse Steifigkeit gefordert.

Die bekannten Ausführungsformen haben sich zwar grundsätzlich bewährt, wenn es darum geht, die zuvor beschriebenen Anforderungen und insbesondere die an sich widerstreitenden Zielsetzungen eines hohen Abriebschutzes einerseits und einer guten Geräuschdämpfung andererseits miteinander in Einklang zu bringen. Erkauft wird die Erfüllung dieser an sich gegensätzlichen Zielsetzungen damit, dass der herstellungstechnische Aufwand zur Realisierung des jeweiligen Trägers groß ist und folgerichtig die Klebebänder nur zu einem erhöhten Preis gegenüber bisher im Markt befindlichen Produkten angeboten werden können. Hinzu kommt, dass durch die speziellen Maßnahmen bei der Herstellung des Trägers das Gewicht des solchermaßen realisierten Klebebandes steigt oder steigen kann, so dass insgesamt die Handhabung schwierig wird. Hierzu trägt auch der Umstand bei, dass die zuvor beschriebenen und bekannten Klebebänder aufgrund ihrer speziellen Trägerkonstruktion praktisch nicht (mehr) von Hand einreißbar sind.

Die sogenannte Handeinreißbarkeit bzw. Quereinreißbarkeit in Querrichtung des längserstreckten Trägers und folglich auch des Klebebandes ist jedoch eine wesentliche Forderung von Kabelsatzherstellern, um die Verarbeitung insgesamt einfach zu halten und einen zusätzlichen Schneidevorgang beim Ablängen der einzelnen Klebebandstreifen entbehrlich zu machen. Als Kriterium für die Handeinreißbarkeit gilt dabei entsprechend dem Stand der Technik nach der DE 600 31 332 T2 eine sogenannte Querreißkraft von 10 N im Maximum. Das heißt, solange die Reißkraft bzw. Reißfestigkeit in Querrichtung des Klebebandes von weniger als 10 N vorliegt, wird das betreffende Klebeband insgesamt als handeinreißbar bezeichnet.

Schließlich betrifft der Stand der Technik nach der JP H09-221 614 A ein Klebeband, welches mit einem beispielsweise nicht gewebten Träger und einer Haftklebstoffschicht ausgerüstet ist. Der Klebstoff ist mit einem Schaummittel vermischt, welches bei seiner Verarbeitung aufschäumt und aufgrund der hierdurch gebildeten Schaumzellen insgesamt für eine Geräuschdämpfung sorgt.

Die Geräuschdämpfung und etliche weitere Kriterien bei der Beurteilung von Wickelbändern zum Ummanteln von Kabeln in Automobilen sind in der Prüfrichtlinie LV 312 "Schutzsysteme für Leitungssätze in Kraftfahrzeugen" (beispielsweise Ausgabe 2009) zusammengefasst. Die Prüfrichtlinie geht auf ein gemeinsames Regelwerk der Firmen Audi, BMW, Daimler, Porsche und VW zurück und enthält Prüfungsvorschriften sowie Kriterien und quantitative Angaben für in diesem Zusammenhang anwendungstechnisch wichtige Größen. Hierzu gehören unter anderem Temperaturklassen, das Geräuschdämpfungsverhalten und auch die Abriebbeständigkeit.

Entsprechend der LV 312 werden insgesamt fünf verschiedene Geräuschdämpfungsklassen A bis E voneinander unterschieden, die im Detail im zuvor bereits in Bezug genommenen Stand der Technik nach der EP 2 034 576 A1 beschrieben werden. Verwiesen sei hierzu unter anderem auf den dortigen Abschnitt [0034]. Die Geräuschdampfungsklasse A korrespondiert dabei zu "keiner Geräuschdämpfung", während die Geräuschdämpfungsklasse E eine "sehr hohe Geräuschdämpfung" widerspiegelt. Die in diesem Zusammenhang interessierende Klasse C gehört zu einer "mittleren Geräuschdämpfung", während die Klasse D bereits eine "hohe Geräuschdämpfung" signalisiert.

Die einzelnen Geräuschdämpfungsklassen spiegeln das Verhalten das Klebebandes bzw. des solchermaßen umwickelten Kabelsatzes und die Auswirkung des Klebebandes auf die Geräuschentwicklung wider, die als Geräuschdämpfung in dB(A) jeweils gemessen wird. Wie in der EP 2 034 576 A1 im Detail beschrieben, korrespondieren nun die einzelnen Geräuschdämpfungsklassen zu unterschiedlichen hiermit erreichten Geräuschdämpfungen, beispielsweise für die Klasse C von mehr als 5 bis 10 dB(A), wohingegen die Geräuschdämpfungsklasse D den Bereich von mehr als 10 bis 15 dB(A) widerspiegelt.

Der Erfindung liegt das technische Problem zugrunde, eine derartige Verwendung so weiterzuentwickeln, dass insgesamt eine hohe Geräuschdämpfung erreicht wird, und zwar unter Berücksichtigung eines konstruktiv gegenüber dem Stand der Technik vereinfachten Aufbaus.

Zur Lösung dieser technischen Problemstellung ist eine gattungsgemäße Verwendung im Rahmen der Erfindung dadurch gekennzeichnet, dass die Hohlkörper der Klebstoffmasse zudosiert und zusammen mit der Klebstoffmasse bei Verarbeitungstemperaturen von 150 °C und mehr auf den Träger aufgebracht werden, wobei die Klebstoffmasse aus Kautschuk oder Acrylat hergestellt ist und als Hotmelt auf den Träger aufgebracht sowie durch einen Düsenauftrag oder durch Walzen verarbeitet wird. Vorzugsweise sind die in den Klebstoff größtenteils strukturstabilen Hohlkörper mit einer Grammatur bis zu ca. 5 Masse-% bezogen auf die Klebstoffmasse eingelagert.

Die Strukturstabilität der Hohlkörper meint im Rahmen der Erfindung, dass die fraglichen Hohlkörper während ihrer Verarbeitung im Maximum eine Volumenänderung im Bereich bis ca. ± 20 %, insbesondere bis maximal ± 10 %, bezogen auf ihr ursprüngliches Volumen, aufweisen. Hierbei geht die Erfindung von der Erkenntnis aus, dass die fraglichen Hohlkörper erfindungsgemäß der Klebstoffmasse zudosiert und zusammen mit der Klebstoffmasse auf den Träger aufgebracht werden. Das erfolgt derart, dass die Klebstoffmasse während der Dosierung und auch beim Auftrag auf den Träger erhitzt wird, wie man dies von sogenannten Hotmeltklebern kennt, die u. a. auf Basis von Acrylat oder Kautschuk auf diese Weise verarbeitet werden, und zwar erfindungsgemäß durch den Düsenauftrag oder durch Walzen..

Dabei werden Verarbeitungstemperaturen von 150 °C und mehr beobachtet. Die größtenteils strukturstabile Auslegung der Hohlkörper bedeutet in diesem Zusammenhang, dass sich aufgrund der erhöhten Temperatur zwangsläufig einstellende Volumenänderungen der Hohlkörper im beschriebenen Bereich bewegen und im Maximum ± 20 % bezogen auf das ursprüngliche Volumen nicht überschreiten. Vorzugsweise werden sogar nur Volumenänderungen von ± 10 % im Maximum beobachtet.

Neben einem solchen beispielsweise Walzen- oder Düsenauftrag in heißem und fließfähigem Zustand ist es natürlich auch denkbar, den Klebstoff mit den eingebrachten strukturstabilen Hohlkörpern als Dispersion auf den Träger aufzutragen. In diesem Fall drückt die größtenteils strukturstabile Auslegung der Hohlkörper aus, dass die Hohlkörper ihr Volumen ebenfalls praktisch nicht oder nur im vorgeschriebenen Bereich bis maximal ± 20 % Volumenänderung verändern, was durch den Kontakt mit einem zwangsläufigen Lösemittel bei solchen Dispersionen grundsätzlich möglich ist. Jedenfalls sind die Hohlkörper in diesem Sinne größtenteils strukturstabil ausgelegt und im Klebstoff typischerweise gleichmäßig verteilt angeordnet. Das ergibt sich schon aufgrund der beschriebenen Auftragsverfahren für den Klebstoff.

Außerdem stellt die größtenteils strukturstabile Auslegung der Hohlkörper sicher, dass diese nach wie vor geschlossenzellig ausgebildet sind, und zwar auch bei dem fertigen Klebeband. Die Hohlkörper können beispielsweise beim Verarbeitungsprozess des Klebstoffes nicht "platzen" oder sonst wie zerstört werden. Der auf diese Weise sichergestellte geschlossenzellige Charakter der Hohlkörper sorgt in Verbindung mit ihrer Grammatur von bis zu 10 Masse-% bezogen auf die Klebstoffmasse insgesamt dafür, dass besondere Vorteile und Eigenschaften für das solchermaßen ausgerüstete erfindungsgemäße Klebband beobachtet werden.

Zu diesen Vorteilen gehört nicht nur ein verringerter Einsatz von Klebstoff im Vergleich zu einer Variante, die auf die fraglichen Hohlkörper verzichtet. Tatsächlich kann die eingesetzte Masse an Klebstoff um bis zu ca. 10 Masse-% durch dessen teilweise Substitution seitens der Hohlkörper verringert werden, so dass als Folge hiervon auch der Klebstoffverbrauch entsprechend sinkt. Zugleich wird hierdurch das Gesamtgewicht eines solchermaßen ausgelegten Klebebandes positiv beeinflusst. Denn die Hohlkörper verfügen mit einer spezifischen Dichte von weniger als 0,8 g/cm³ über eine deutlich geringere Dichte als beispielsweise Acrylatklebstoff mit einer Dichte von ca. 1g/cm³. Als besonderer Vorteil ist weiter zu berücksichtigen, dass die in den Klebstoff eingebrachten Hohlkörper zu einer im Vergleich zu einer Beschichtung mit Klebstoff ohne Hohlkörper signifikanten Geräuschdämpfung korrespondieren.

Tatsächlich liegt erfindungsgemäß die Geräuschdämpfung um wenigstens ca. 10 % höher im Vergleich zu einem Klebeband gleichen Aufbaus ohne in den Klebstoff eingebrachte Hohlkörper. Beispielsweise kann durch die Zugabe der Hohlkörper in den Klebstoff bei ansonsten gleichem Aufbau des Klebebandes die Geräuschdämpfungsklasse gesteigert werden, beispielsweise von der Geräuschdämpfungsklasse C ohne Hohlkörper bis zur Geräuschdämpfungsklasse D mit eingelagerten Hohlkörpern, jeweils gemessen entsprechend der zuvor bereits beschriebenen Norm LV 312.

Das alles gelingt, ohne den Träger im beschriebenen Vergleichsfall in irgendeiner Weise zu ändern respektive einen speziellen Trägeraufbau zu wählen oder wählen zu müssen. Vielmehr hat es sich als günstig erwiesen, wenn ein üblicher und einlagiger Träger zum Einsatz kommt, der typischerweise eine Dicke von weniger als 1 mm, insbesondere von 0,9 mm und weniger aufweist. Vorzugsweise kann die Dicke des Trägers sogar auf 0,5 mm und weniger eingestellt werden.

Als geeignete Trägermaterialien haben sich grundsätzlich ganz verschiedene Werkstoffe und Ausführungsformen als geeignet für die Erfindung erwiesen. So kann es sich bei dem Träger um eine Folie, ein Gewebe, insbesondere ein PET-Gewebe, ein Vlies, ein Gewirke, ein Nähvlies, ein Nähgewirke, ein Kettengewirke etc. einzeln oder in Kombinationen handeln. Das heißt, der Träger kann prinzipiell auch zwei oder mehrschichtig aufgebaut sein. Im Regelfall ist jedoch ein solcher mehrlagiger bzw. mehrschichtiger Aufbau nicht erforderlich, weil erfindungsgemäß anstelle des Trägers oder ergänzend hierzu primär die Beschichtung mit dem Klebstoff durch die eingelagerten strukturstabilen Hohlkörper für die gewünschte Geräuschdämpfung sorgt.

Der Träger als solcher kann dagegen größtenteils in Richtung auf einen möglichst hohen Abriebschutz ausgelegt werden. Das gelingt insbesondere für den Fall, dass an dieser Stelle ein Gewebe zum Einsatz kommt. Beispielsweise mag es sich bei dem Gewebe um ein Polyester- oder Polyamidgewebe handeln, das eine besonders hohe Abriebbeständigkeit aufweist. Das Flächengewicht des auf diese Weise realisierten Trägers mag in diesem Zusammenhang im Bereich von 100 g/m² bis 200 g/m² angesiedelt sein. Tatsächlich werden in diesem Kontext Abriebbeständigkeiten der Abriebschutzklasse D oder auch sogar der Abriebschutzklasse E entsprechend der Norm LV 312 beobachtet.

Das alles gelingt vorteilhaft unter gleichzeitiger Beibehaltung bzw. Einstellung der erforderlichen Handeinreißbarkeit. Das heißt, das erfindungsgemäße Klebeband ist nach bevorzugter Ausführungsform handeinreißbar ausgelegt. Hierunter ist im Rahmen der Erfindung eine Reißkraft in Querrichtung des Klebebandes von im Maximum 10 N gemeint, wie dies im zuvor bereits referierten Stand der Technik nach der DE 600 31 332 T2 im Detail beschrieben wird. Das heißt, auf Basis der erfindungsgemäßen Vorschrift zur Herstellung des entsprechenden Klebebandes lassen sich prinzipiell die verschiedenen und gegenläufigen Anforderungen eines einerseits ausreichenden Abriebschutzes mit einer hinlänglichen Geräuschdämpfung vereinigen, und zwar bei zugleich einfachem und kostengünstigem Aufbau.

Hinzu kommt, dass das erfindungsgemäße Klebeband handeinreißbar ausgelegt werden kann und insgesamt über eine geringe Flächenmasse verfügt, die typischerweise für das gesamte Klebeband unterhalb von 400 g/m² und bevorzugt sogar bei 350 g/m² und weniger angesiedelt ist. Das erklärt sich aufgrund der Tatsache, dass der Träger im Allgemeinen eine Flächenmasse bzw. ein Flächengewicht von 100 g/m² bis 200 g/m² aufweist. Die Klebebeschichtung mit den eingelagerten und größtenteils strukturstabilen Hohlkörpern verfügt vorzugsweise über eine Auftragsmasse bzw. ein Auftragsgewicht auf den Träger von 20 g/m² bis 150 g/m², so dass sich das zuvor erläuterte Gesamtgewicht erklärt. Dieses geringe Gesamtgewicht begünstigt die Handhabung.

Von besonderer weiterer Bedeutung im Rahmen der Erfindung ist nun der Umstand, dass die in den Klebstoff eingelagerten sowie größtenteils strukturstabilen Hohlkörper eine Grammatur bezogen auf die Klebstoffmasse von bis zu 10 Masse-% im Maximum und insbesondere bis zu ca. 5 Masse-% im Maximum aufweisen. Durch diese Vorschrift wird sichergestellt, dass die einzelnen Hohlkörper bei einer gleichmäßigen Verteilung innerhalb der Klebstoffmasse einen ausreichenden Abstand zueinander aufweisen. In Verbindung mit ihrem geschlossenzelligen Charakter wird dadurch zugleich die gewünschte und verbesserte Geräuschdämpfung im Vergleich zu einem Klebeband gleichen Aufbaus ohne in den Klebstoff eingelagerte Hohlkörper beobachtet. Gleichzeitig gewährleistet die Begrenzung auf 10 Masse-% im Maximum, dass der Klebstoff mit den zudosierten Hohlkörpern wie beschrieben und herkömmlich verarbeitet werden kann.

Tatsächlich sorgt die Obergrenze von 10 Masse-% an Hohlkörpern einerseits dafür, dass die einzelnen Hohlkörper nicht "zu nahe" zueinander in der Matrix aus dem Klebstoff bzw. der Klebstoffmasse angeordnet sind. Nur so können sie für die gewünschte Geräuschdämpfung sorgen. Außerdem würde eine zu geringe Beabstandung und folglich eine größere Grammatur die Schicht aus dem Klebstoff schwächen, so dass diese reißen könnte.

Bei der gewünschten Wirkung zur Geräuschdämpfung geht die Erfindung von der Erkenntnis aus, dass die einzelnen geschlossenzelligen Hohlkörper bei einer auftreffenden akustischen Welle für eine gewünschte Inhomogenität der Klebstoffmasse in der Ausbreitungsrichtung der akustischen Welle und dafür sorgen, dass die Wellenfront sich nicht homogen durch die Beschichtung aus dem Klebstoff ausbreiten kann. Vielmehr trifft die akustische Welle auf ihrem Weg durch die Beschichtung insgesamt auf die Hohlkugeln, die die akustische Welle nicht weiterleiten bzw. wunschgemäß dämpfen. Zugleich stellt die Begrenzung auf 10 Masse-% im Maximum sicher, dass die Beschichtung aus dem Klebstoff mechanisch nach wie vor belastbar ist und nicht reißt sowie über die nötige Flexibilität verfügt, wenn es darum geht, das Klebeband als Wickelband um die zu ummantelnden Kabel herumzuführen. Schließlich stellt die Begrenzung auf 10 Masse-% im Maximum sicher, dass die Klebstoffmasse mit den zudosierten Hohlkörpern nach wie vor und unverändert nach den herkömmlichen Verfahren, beispielsweise im Düsenverfahren, im Walzenauftragsverfahren, in Gestalt einer Dispersion usw. auf den Träger aufgebracht werde kann. Das heißt, etwaige Modifikationen an den Auftragsverfahren sind ausdrücklich nicht erforderlich.

Um die wunschgemäße Wirkung bzw. Geräuschdämpfungswirkung bei dem erfindungsgemäßen Klebeband prinzipiell beobachten zu können, hat es sich darüber hinaus bewährt, wenn die größtenteils strukturstabilen Hohlkörper mit einer Grammatur von wenigstens 2 Masse-% im Minimum in den Klebstoff eingelagert sind. Ansonsten lässt sich die gewünschte geräuschdämpfende Wirkung nicht oder praktisch nicht beobachten. Solange jedoch das beschriebene Intervall für die Grammatur der Hohlkörper im Bereich von ca. 2 Masse-% bis 10 Masse-% eingehalten wird, gestaltet sich die Verarbeitung der solchermaßen ausgerüsteten Klebstoffmasse unproblematisch und werden zugleich die gewünschten geräuschdämpfenden Wirkungen beobachtet, die im Endeffekt darauf hinauslaufen, dass die Geräuschdämpfung um wenigstens ca. 10 % gegenüber einem Klebeband gleichen Aufbaus ohne in den Klebstoff eingebrachte Hohlkörper gesteigert ist. Tatsächlich kann sogar eine Steigerung der Geräuschdämpfung von 20 % und mehr beobachtet werden.

Die Hohlkörper als solche sind vorteilhaft kugelförmig ausgelegt, wenngleich die Erfindung grundsätzlich jedwede Raumformen für die Hohlkörper zulässt. Bewährt und als besonders günstig erwiesen haben sich jedoch Hohlkörper mit kugelförmigem Charakter, da sich diese besonders einfach verarbeiten lassen. Denn die Hohlkörper verhalten sich unter dieser Voraussetzung wie vergrößerte Flüssigkeitstropfen innerhalb der Klebstoffmasse, so dass Beeinträchtigungen bei der Verarbeitung und dem Auftrag auf den Träger nicht zu beobachten sind. Das gilt erst recht unter Berücksichtigung einer vorteilhaften Ausgestaltung der vorzugsweise kugelförmigen Hohlkörper derart, dass diese mit einem Durchmesser im Bereich von 5 µm bis 200 µm und insbesondere im Bereich von 5 µm bis 150 µm ausgebildet sind. Denn dadurch verfügen die Hohlkörper über eine geringe Größe bzw. einen geringen Durchmesser und sind folglich als insgesamt Mikrohohlkörper bzw. Mikrohohlkugeln ausgelegt.

Das heißt, bei den Hohlkörpern handelt es sich vorteilhaft um geschlossenzellige Mikrohohlkugeln. Diese Mikrohohlkugeln verfügen darüber hinaus bevorzugt über eine spezifische Dichte von weniger als 0,8 g/cm³. Insbesondere wird sogar eine spezifische Dichte von 0,6 g/cm³ und weniger beobachtet. Jedenfalls liegt die spezifische Dichte der Hohlkörper deutlich unterhalb derjenigen des Klebstoffes, in dem sie eingebettet sind.

Solche Mikrohohlkugeln sind generell verfügbar und werden beispielsweise von der Firma 3M angeboten. Tatsächlich kann es sich bei den Mikrokohlkugeln um Glashohlkugeln, Polymerhohlkugeln sowie Kombinationen handeln. Sofern Glaskohlkugeln zum Einsatz kommen, handelt es sich um solche, die regelmäßig aus wasserunlöslichem chemisch stabilen Borsilikatglas hergestellt sind. Bisher werden solche Mikrohohlkugeln als Füllstoff in Farben oder Lacken eingesetzt. Durch ihre Ausprägung eignen sie sich auch zur Einlagerung in Hotmelts oder Klebstoffdispersionen und verhalten sich hierin größtenteils neutral.

Die Mikrohohlkugeln können zur Verbesserung des Geräuschdämpfungsverhaltens des solchermaßen ausgerüsteten Klebstoffes ganz oder teilweise evakuiert sein. Hierbei geht die Erfindung von der weiteren Erkenntnis aus, dass ganz oder teilweise evakuierte Hohlkörper bzw. Mikrohohlkugeln aufgrund des in ihrem Innern herrschenden Vakuums auftreffenden Schall praktisch nicht oder nur geringfügig weiterleiten, weshalb sich das gesteigerte Geräuschdämpfungsverhalten erklärt.

## Patentansprüche

1. Verwendung eines Klebebandes als Wickelband zum Ummanteln von Kabeln in Automobilen, wobei das Klebeband mit einem längs erstreckten Träger, und mit einer ein- oder beidseitig aufgebrachten Beschichtung auf Basis eines Klebstoffes ausgerüstet ist, und wobei in den Klebstoff größtenteils strukturstabile Hohlkörper mit einer Grammatur von wenigstens 2 Masse-% und bis zu 10 Masse-% bezogen auf die Klebstoffmasse eingelagert sind,
**dadurch gekennzeichnet, dass**
- die Hohlkörper der Klebstoffmasse zudosiert und zusammen mit der Klebstoffmasse bei Verarbeitungstemperaturen von 150 °C und mehr auf den Träger aufgebracht werden, wobei
- die Klebstoffmasse aus Kautschuk oder Acrylat hergestellt ist und als Hotmelt auf den Träger aufgebracht sowie durch einen Düsenauftrag oder durch Walzen verarbeitet wird.

2. Verwendung nach Anspruch 1, **dadurch gekennzeichnet, dass** die Hohlkörper vorzugsweise kugelförmig mit einem Durchmesser im Bereich von 5 µm bis 200 µm, insbesondere 5 µm bis 150 µm, ausgebildet sind.

3. Verwendung nach Anspruch 1 oder 2, **dadurch gekennzeichnet, dass** die Hohlkörper während ihrer Verarbeitung maximal eine Volumenänderung im Bereich bis ca. ± 20 %, insbesondere im Bereich bis ± 10 %, bezogen auf ihr ursprüngliches Volumen, aufweisen.

4. Verwendung nach einem der Ansprüche 1 bis 3, **dadurch gekennzeichnet, dass** die Hohlkörper als geschlossenzellige Mikrohohlkugeln mit einem Durchmesser von 5 µm bis 200 µm ausgebildet sind.

5. Verwendung nach Anspruch 4, **dadurch gekennzeichnet, dass** die Mikrokohlkugeln eine spezifische Dichte von weniger als 0,8 g/cm³, insbesondere von 0,6 g/cm³ und weniger, aufweisen.

6. Verwendung nach Anspruch 4 oder 5, **dadurch gekennzeichnet, dass** die Mikrohohlkugeln als Glashohlkugeln, Polymerhohlkugeln sowie Kombinationen ausgelegt sind.

7. Verwendung nach einem der Ansprüche 4 bis 6, **dadurch gekennzeichnet, dass** die Mikrohohlkugeln evakuiert sind.

8. Verwendung nach einem der Ansprüche 1 bis 7, **dadurch gekennzeichnet, dass** die Beschichtung mit dem Klebstoff ein Auftragsgewicht auf den Träger von 20 g/m² bis 150 g/m² aufweist.

9. Verwendung nach einem der Ansprüche 1 bis 8, **dadurch gekennzeichnet, dass** die Geräuschdämpfung um wenigstens ca. 10 %, insbesondere um wenigstens ca. 20 %, gegenüber einem Klebeband gleichen Aufbaus ohne in den Klebstoff eingebrachte Hohlkörper gesteigert ist.

10. Verwendung nach Anspruch 9, **dadurch gekennzeichnet, dass** durch die Zugabe der Hohlkörper in den Klebstoff die Geräuschdämpfungsklasse von zuvor C bis auf D entsprechend LV 312 gesteigert ist.

11. Verwendung nach einem der Ansprüche 1 bis 10, **dadurch gekennzeichnet, dass** der Träger eine Dicke von weniger als 1 mm, insbesondere von 0,9 mm und weniger, vorzugsweise von 0,5 mm und weniger, aufweist.

12. Verwendung nach einem der Ansprüche 1 bis 11, **dadurch gekennzeichnet, dass** es handeinreißbar mit einer Querreißkraft von 10 N und weniger ausgebildet ist.

13. Verwendung nach einem der Ansprüche 1 bis 12, **dadurch gekennzeichnet, dass** der Träger aus einer Folie, einem Gewebe, einem Vlies, einem Gewirke einzeln oder in Kombination hergestellt ist.

## Claims

1. Use of an adhesive tape as a winding tape for wrapping cables in automobiles, wherein the adhesive tape is equipped with a carrier extending lengthwise and with an adhesive-based coating that is applied to one or both sides thereof, and wherein mostly structurally stable hollow bodies having a grammage of at least 2 mass % and up to 10 mass % relative to the mass of the adhesive are embedded in the adhesive,
**characterized in that**
- the hollow bodies are added to the adhesive mass in measured quantities and applied to the carrier together with the adhesive mass at processing temperatures of 150 °C and more, wherein
- the adhesive mass is produced from rubber or acrylate and applied to the carrier as a hot melt, and is processed by nozzle application or rollers.

2. Use according to Claim 1, **characterized in that** the hollow bodies are preferably constructed as spheres having a diameter in the range from 5 µm to 200 µm, particularly 5 µm to 150 µm.

3. Use according to Claim 1 or 2, **characterized in that** while they are being processed the hollow bodies undergo a maximum change of volume in the range up to about ±20%, particularly in the range up to ±10% relative to their original volume.

4. Use according to any one of Claims 1 to 3, **characterized in that** the hollow bodies are embodied as close-cell microbeads having a diameter from 5 µm to 200 µm.

5. Use according to Claim 4, **characterized in that** the microbeads have a specific density of less than 0.8 g/cm³, particularly 0.6 g/cm³ and less.

6. Use according to Claim 4 or 5, **characterized in that** the microbeads are designed as hollow glass spheres, hollow polymer spheres and combinations thereof.

7. Use according to any one of Claims 4 to 6, **characterized in that** the microbeads are evacuated.

8. Use according to any one of Claims 1 to 7, **characterized in that** the coating with the adhesive has a coating weight on the carrier from 20 g/m² to 150 g/m².

9. Use according to any one of Claims 1 to 8, **characterized in that** the noise suppression is increased by about 10%, particularly by about at least 20% compared with an adhesive tape of the same construction without hollow bodies incorporated in the adhesive.

10. Use according to Claim 9, **characterized in that** the addition of the hollow bodies to the adhesive has the effect of raising the noise suppression class from previously C to D, corresponding to LV 312.

11. Use according to any one of Claims 1 to 10, **characterized in that** the carrier has a thickness of less than 1 mm, particularly less than 0.9 mm and less, preferably 0.5 mm and less.

12. Use according to any one of Claims 1 to 11, **characterized in that** it is designed to be tearable by hand with a transverse tearing force of 10 N and less.

13. Use according to any one of Claims 1 to 12, **characterized in that** the carrier is manufactured from a film, a woven fabric, a non-woven fabric or a knitted textile separately or in a combination thereof.

## Revendications

1. Utilisation d'une bande adhésive sous la forme d'une bande d'enroulement pour enrober des câbles dans le secteur automobile, sachant que la bande adhésive est dotée d'un support étendu longitudinalement et d'un revêtement appliqué sur un côté ou sur les deux côtés sur la base d'un adhésif et sachant que des corps creux pour la plupart de structure stable d'un grammage d'au moins 2 %/masse et jusqu'à 10 %/masse par rapport à la masse adhésive, sont incorporés dans l'adhésif, **caractérisée en ce que**
- les corps creux sont ajoutés en dosage à la masse adhésive et sont appliquées ensemble avec la masse adhésive sur le support à des températures de traitement de 150° C et plus, sachant que
- la masse adhésive est fabriquée à partir de caoutchouc ou d'acrylate et est appliquée sous la forme de produit thermofusible sur le support et est traitée par une application à la buse ou par rouleaux.

2. Utilisation selon la revendication 1, **caractérisée en ce que** les corps creux sont constitués de préférence sous une forme sphérique avec un diamètre se situant dans une plage de 5 µm à 200 µm, en particulier de 5 µm à 150 µm.

3. Utilisation selon la revendication 1 ou 2, **caractérisée en ce que** les corps creux présentent au maximum pendant leur traitement, une variation de volume se situant dans une plage allant jusqu'à environ ± 20 %, en particulier dans une plage allant jusqu'à environ ± 10 % par rapport à leur volume original.

4. Utilisation selon l'une quelconque des revendications 1 à 3, **caractérisée en ce que** les corps creux sont constitués sous la forme de microsphères à alvéoles fermées avec un diamètre de 5 µm à 200 µm.

5. Utilisation selon la revendication 4, **caractérisée en ce que** les microsphères creuses comportent une épaisseur spécifique de moins de 0,8 g/cm³, en particulier de 0,6 g/cm³ et moins.

6. Utilisation selon la revendication 4 ou 5, **caractérisée en ce que** les microsphères creuses sont conçues sous la forme de sphères creuses en verre, de sphères creuses en polymère et de combinaisons.

7. Utilisation selon l'une quelconque des revendications 4 à 6, **caractérisée en ce que** les microsphères creuses sont évacuées.

8. Utilisation selon l'une quelconque des revendications 1 à 7, **caractérisée en ce que** le revêtement avec l'adhésif comporte un poids d'application sur le support de 20 g/m² à 150 g/m².

9. Utilisation selon l'une quelconque des revendications 1 à 8, **caractérisée en ce que** l'insonorisation est augmentée d'au moins environ 10 %, en particulier d'au moins environ 20 % par rapport à une bande adhésive de structure identique sans corps creux incorporés dans l'adhésif.

10. Utilisation selon la revendication 9, **caractérisée en ce que** la catégorie d'insonorisation est augmentée préalablement de C à D selon LV 312 grâce à l'addition de corps creux dans l'adhésif.

11. Utilisation selon l'une quelconque des revendications 1 à 10, **caractérisée en ce que** le support comporte une épaisseur de moins de 1 mm, en particulier de 0,9 mm et moins, de préférence de 0,5 mm et moins.

12. Utilisation selon l'une quelconque des revendications 1 à 11, **caractérisée en ce que** la bande adhésive est d'une constitution déchirable à la main avec une force de déchirure transversale de 10 N et moins.

13. Utilisation selon l'une quelconque des revendications 1 à 12, **caractérisée en ce que** le support est fabriqué, individuellement ou en combinaison, à partir d'une feuille, d'un tissu, d'un produit non-tissé, d'un produit tricoté.
